# EUROPEAN PATENT APPLICATION

(11) **EP 4 510 236 A1**
(43) Date of publication of application: **19.02.2025**
(21) Application number: 23861672.6
(22) Date of filing: 28.06.2023
(51) Int. Cl.: H01M 4/587, H01M 4/583, H01M 4/133, H01M 10/0525, H01M 10/058, C01B 32/20

(54) **NEGATIVE ELECTRODE MATERIAL AND BATTERY**

(71) Applicant: BTR NEW MATERIAL GROUP CO., LTD., Shenzhen, Guangdong 518106 (CN)
(72) Inventor: ZU, Mengyang, Guangdong 518118 (CN); ZHANG, Meng, Guangdong 518118 (CN); LI, Zikun, Guangdong 518118 (CN); HUANG, Jian, Guangdong 518118 (CN); REN, Jianguo, Guangdong 518118 (CN)
(74) Representative: Daub, Thomas
(86) International application number: PCT/CN2023/103369
(87) International publication number: WO 2025/000284

(57) **Abstract**

The present disclosure provides an anode material and a battery, the anode material includes graphite, pores are formed at the surface of and/or inside the graphite, the anode material has a pore volume of V cm³/kg, a true density of D g/cm³, a specific surface area is S m²/g, a degree of graphitization is G%, wherein, 0.7≤V*S/D≤3.95, and 89≤G≤93. The anode material and the battery according to the present disclosure can improve the rate performance and the cycle performance of the graphite anode material under a high rate current.

## Description

### TECHNICAL FIELD

The present disclosure relates to the technical field of anode materials, in particular to an anode material and a battery.

### BACKGROUND

Lithium ion batteries have also shown good application prospects in the fields of portable consumer electronics, electric tools, new energy vehicles, energy storage and the like due to their excellent performance. From the commercialization of lithium ion batteries to date, the most mature anode material used are graphitic anode material. At present, the main development direction of lithium ion batteries is high capacity, high rate and high safety, so the development of high-performance graphite negative electrodes is critical for obtaining lithium ion batteries with high rate performance and good cycle performance.

In terms of technology, a special layered structure of graphite determines that Li+ can only be intercalated from the end face of a material and gradually diffused into particles, resulting in a low diffusion rate of lithium ions and poor rate performance, meanwhile, lithium intercalation at a large rate easily causes lithium ion enrichment on the surface of a graphite negative electrode, when the concentration of lithium ions at the interface reaches saturation, lithium ions can be deposited in a metal form, resulting in a diffusion pathway and an electrochemical reaction area cannot be fully utilized.

Therefore, at the present stage where the graphite material has been developed to be very mature, a single improvement of one parameter has failed to meet the market requirements for obtaining a graphite anode material with high rate performance and good cycle performance, and it is necessary to explore the action mechanism of multiple factors synergistically to develop a graphite anode material meeting the market requirements.

### SUMMARY

In view of the problems, the present disclosure aims to provide a camera lens, which can achieve a high optical performance while satisfying design requirements for ultra-thin, wide-angle lenses having a big aperture.

In an embodiment, the present disclosure provides a camera optical lens. The camera optical lens includes, from an object side to an image side: a first lens; a second lens; a third lens; a fourth lens; a fifth lens; a sixth lens; a seventh lens; and an eighth lens. The camera optical lens satisfies following conditions: 1.90≤f1/f≤3.00; f2≤0.00; and 1.55≤n3≤1.70, where f denotes a focal length of the camera optical lens; f1 denotes a focal length of the first lens; f2 denotes a focal length of the second lens; and n3 denotes a refractive index of the third lens.

The present disclosure can achieve ultra-thin, wide-angle lenses having good optical characteristics and a big aperture, which are especially suitable for camera lens assembly of mobile phones and WEB camera lenses formed by CCD, CMOS and other imaging elements for high pixels. In view of the deficiencies of the prior art, the present disclosure provides a new anode material and battery, and the anode material achieves accurate regulation of internal and/or surface pore volume, specific surface area and true density, so that the anode material is maintained in a reasonable range by combination, thereby improving capacity and rate performance of the anode material.

In a first aspect, the present disclosure provides an anode material, the anode material includes graphite, a surface and/or an interior of the graphite has pores, a pore volume of the anode material is V cm³/kg, a true density is D g/cm³ , a specific surface area is S m²/g, and a degree of graphitization is G%, wherein 0.7≤V*S/D≤3.95, and 89≤G≤93;

The pore volume is tested by ASAP2460 device from American Micromeritics, and calculated in a pore size range of 17 Å to 3000 Å by a model of BJH Desortation cumulative volume of pores.

In some embodiments, the pore volume of the anode material is V cm³/kg, 1.812≤V≤4.987.

In some embodiments, the specific surface area of the anode material is S m²/g, and 0.872≤S≤1.773.

In some embodiments, the true density of the anode material is D g/cm³, 2.238≤D≤2.257.

In some embodiments, the pores include at least one of micro-pores and meso-pores.

In some embodiments, the pores extend from the surface of the graphite to the interior.

In some embodiments, the graphite is artificial graphite.

In some embodiments, the average pore size of the pores is 50 Å to 200 Å.

In some embodiments, the anode material is measured by X-ray diffraction, and a crystal plane layer spacing of a plane (002) is d₀₀₂ , where 3.356 Å≤d₀₀₂≤3.364 Å.

In some embodiments, the particle size D₅₀ of the anode material is 10 µm to 20 µm.

In some embodiments, the anode material further includes amorphous carbon, and the amorphous carbon is present on a surface of graphite and/or dispersed among graphite particles.

In some embodiments, the anode material further includes an amorphous carbon coating layer located on a surface of the graphite, and a thickness of the amorphous carbon coating layer is 10 nm to 500 nm.

In some embodiments, the mass ratio of the amorphous carbon in the anode material is 0.1 wt% to 3 wt%.

In a second aspect, the present disclosure provides a battery, the battery includes the anode material according to the first aspect.

The technical solution of the present disclosure has at least the following beneficial effects:

The anode material provided by the disclosure includes graphite, the surface and/or the interior of the graphite has pores, the pores extend from the surface of the graphite to the interior, and rich pores are generated in the surface and the near surface of the graphite while a regular graphite layered structure of the anode material is reserved. The anode material has a pore volume of V cm³/kg, a true density of D g/cm³, a specific surface area of S m²/g, and a degree of graphitization of G%, wherein 0.7≤V*S/D≤3.95, and 89≤G≤93. The pore volume within a certain range is beneficial to the intercalation of Li⁺ from the surface of the material along the pore structure, the diffusion rate of lithium ions is improved, the specific surface area within a certain range can ensure a sufficient electrochemical reaction interface, promoting the diffusion of lithium ions at the solid-liquid interface and in the solid phase, reducing the concentration polarization, and improving the capacity and the rate performance of the anode material. However, the rate performance of the anode material has a larger improvement space when only the proper pore volume and specific surface area are met, the reason is that, after the lithium ions diffuse to the surface of the graphite, if the carbon atoms in the graphite are disordered and the degree of order is not sufficient, the lithium ions are more hindered from entering the interior of the graphite material and combining with carbon atoms to have an electrochemical reaction, meanwhile, because the graphite is polycrystalline, especially artificial graphite, grain boundary defects are present between the crystal grains, the grain boundary defects have uneven stress, the grain boundary belongs to one of the crystal plane defects, cracks easily occur, and under the condition of external force, the cracks are more easily split along the grain boundary direction, and the cracks occur along the crystal plane, finally, the split crystal plane parallel to the plane direction of the graphite crystal layer forms the outer surface of the graphite particles. Due to the fact that the outer surfaces are perpendicular to the diffusion direction of the lithium ions, the carbon planes must be crossed, so that the lithium ions are difficult to enter the interior of the graphite, meanwhile, the lithium ions can be aggregated on the surface of the carbon to form lithium clusters, thereby the diffusion of the lithium is inhibited or the lithium deposition is formed, finally, the diffusion pathway and the electrochemical reaction area cannot be fully utilized, therefore, in this disclosure, good diffusion paths are provided for lithium ion diffusion by controlling the degree of graphitization and the true density, meanwhile, the stress in the graphite is concentrated to the periphery of the pores in combination with the design of the pore pathway structure and the pore distribution, the stress at the grain boundary is dispersed, when the graphite is subjected to external force, cracks are formed from the pore pathways at first, which is conducive to the formation of transcrystalline rupture, the pore pathways are finally constructed to be the outer surfaces of the graphite particles after being exposed, transcrystalline rupture is facilitated to increase the pathway inlets of the surfaces of the graphite particles parallel to the lithium ion diffusion direction, in addition, the inner surfaces of the pore pathways have a certain number of pathway inlets capable of allowing the lithium ions to diffuse between the graphite layers, and meanwhile, due to the fact that the presence of more defects can be achieved edge-end lithium storage, more graphite microcrystalline surfaces parallel to the lithium ion diffusion paths can be constructed, which not only create more lithium ion diffusion paths in interior of the graphite particles, but also more pathway inlets of the surfaces of the particle are created for the lithium ions entering. Meanwhile, considering that a relatively high degree of graphitization is beneficial to a diffusion environment, the hindrance trap formed on lithium ion transmission due to defects such as partial crystal distortion is reduced, the high degree of graphitisation affects the number of graphite polycrystalline grain boundaries as well as lattice distortions to a certain extent, the degree of order of the interlayer arrangement is high and compact, which is beneficial to improve the true density, and it ensures that the anode material exerts a relatively high specific capacity. According to the disclosure, the V*S/D of the anode material is controlled within the above range, and meanwhile the degree of graphitization of the material is controlled, which is beneficial to the combination of lithium ions and sufficient carbon atoms under the condition of low resistance, thereby the anode material has a sufficient lithium deintercalation reaction space, and the anode material with better rate performance and capacity is obtained.

### BRIEF DESCRIPTION OF DRAWINGS

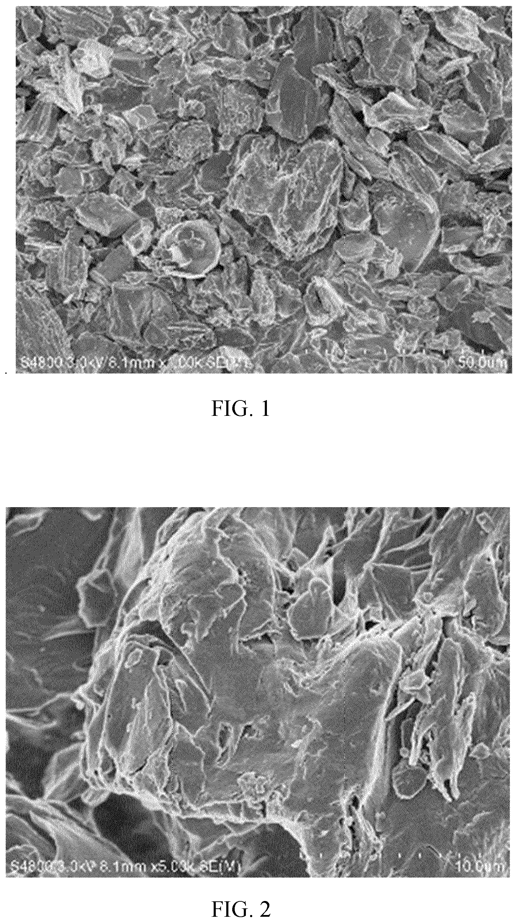

FIG. 1 is a scanning electron microscope image of a graphite anode material according to Embodiment 2 of the present disclosure.
FIG. 2 is another scanning electron microscope image of a graphite anode material according to Embodiment 2 of the present disclosure.

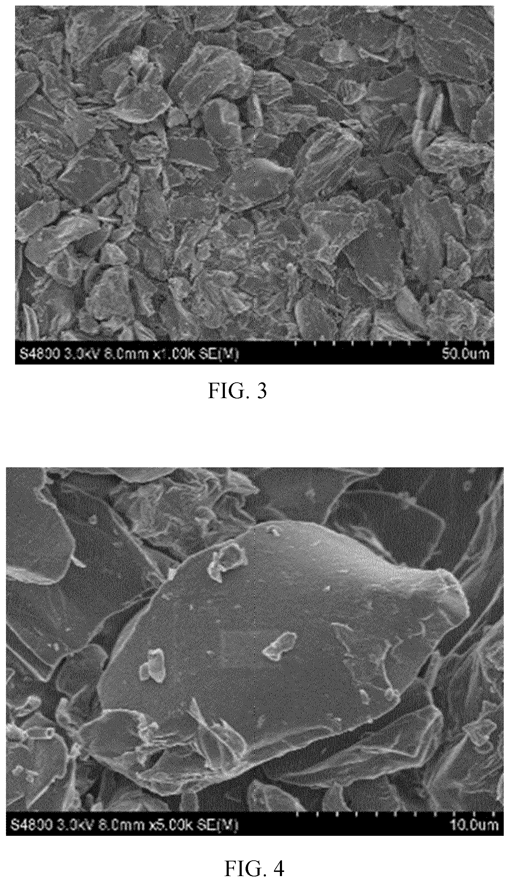

FIG. 3 is a scanning electron microscope image of a graphite anode material according to Embodiment 11 of the present disclosure.
FIG. 4 is another scanning electron microscope image of the graphite anode material according to Embodiment 11 of the present disclosure.

### DESCRIPTION OF EMBODIMENTS

In order to better illustrate the present disclosure and facilitate the understanding of technical solutions of the present disclosure, the present disclosure will be further described in detail below. However, the following examples are only simple examples of the present application, and do not represent or limit the scope of protection of the present application, which shall be defined by the claims.

From the commercialization of lithium ion batteries to date, the most mature anode material used are graphitic anode material. A special layered structure of graphite determines that Li⁺ can only be intercalated from the end face of a material and gradually diffused into particles, resulting in a low diffusion rate of lithium ions and poor rate performance, meanwhile, lithium intercalation at a large rate easily causes lithium ion enrichment on the surface of a graphite negative electrode, when the concentration of lithium ions at the interface reaches saturation, lithium ions can be deposited in a metal form, resulting in a diffusion pathway and an electrochemical reaction area cannot be fully utilized.

Therefore, the present disclosure provides an anode material, the anode material includes graphite, a surface and/or an interior of the graphite has pores, the pores extend from the surface of the graphite to the interior, the anode material has a pore volume of V cm³/kg, a true density of D g/cm³, a specific surface area of S m²/g, a specific surface area is S m²/g, and a degree of graphitization is G%, wherein 0.7≤V*S/D≤3.95, and 89≤G≤93;

The pore volume is tested by ASAP2460 device from American Micromeritics, and calculated in a pore size range of 17 Å to 3000 Å by a model of BJH Desortation cumulative volume of pores.

The anode material according to the disclosure includes graphite, the surface and/or the interior of the graphite has pores, the pores extend from the surface of the graphite to the interior, and rich pores are generated in the surface and the near surface of the graphite while a regular graphite layered structure of the anode material is reserved. The anode material has a pore volume of V cm³/kg, a true density of D g/cm³, a specific surface area of S m²/g, and a degree of graphitization of G%, wherein 0.7≤V*S/D≤3.95, and 89≤G≤93. The pore volume within a certain range is beneficial to the intercalation of Li⁺ from the surface of the material along the pore structure, the diffusion rate of lithium ions is improved, the specific surface area within a certain range can ensure a sufficient electrochemical reaction interface, promoting the diffusion of lithium ions at the solid-liquid interface and in the solid phase, reducing the concentration polarization, and improving the capacity and the rate performance of the anode material. However, the rate performance of the anode material has a larger improvement space when only the proper pore volume and specific surface area are met, the reason is that, after the lithium ions diffuse to the surface of the graphite, if the carbon atoms in the graphite are disordered and the degree of order is not sufficient, the lithium ions are more hindered from entering the interior of the graphite material and combining with carbon atoms to have an electrochemical reaction, meanwhile, because the graphite is polycrystalline, especially artificial graphite, grain boundary defects are present between the crystal grains, the grain boundary defects have uneven stress, cracks easily occur, and under the condition of external force, the cracks are more easily split, finally, the split crystal plane parallel to the plane direction of the graphite crystal layer forms the outer surface of the graphite particles. Due to the fact that the outer surfaces are perpendicular to the diffusion direction of the lithium ions, the carbon planes must be crossed, so that the lithium ions are difficult to enter the interior of the graphite, meanwhile, the lithium ions can be aggregated on the surface of the carbon to form lithium clusters, thereby the diffusion of the lithium is inhibited or the lithium deposition is formed, finally, the diffusion pathway and the electrochemical reaction area cannot be fully utilized, therefore, in this disclosure, good diffusion paths are provided for lithium ion diffusion by controlling the degree of graphitization and the true density, meanwhile, the stress in the graphite is more concentrated to the periphery of the pores in combination with the design of the pore pathway structure and the pore distribution, the stress at the grain boundary is reduced, when the graphite is subjected to external force, cracks are formed from the pore pathways at first, the pore pathways are finally constructed to be the outer surfaces of the graphite particles, so more graphite microcrystalline surfaces parallel to the lithium ion diffusion paths can be constructed, which not only create more lithium ion diffusion paths in interior of the graphite particles, but also more pathway inlets of the surfaces of the particle are created for the lithium ions entering. Meanwhile, considering that a higher degree of graphitization is beneficial to a diffusion environment, a hindrance trap formed on lithium ion transmission due to crystal defect is reduced, and it ensures that the anode material exerts a relatively high specific capacity. According to the disclosure, the V*S/D of the anode material is controlled within the above range, and meanwhile the degree of graphitization of the material is controlled, which is beneficial to the combination of lithium ions and sufficient carbon atoms under the condition of low resistance, thereby the anode material has a sufficient lithium deintercalation reaction space, and the anode material with better rate performance and capacity is obtained.

In some embodiments, the pore volume V cm³/kg of the anode material, 1.812≤V≤4.987, such as 1.812, 2.016, 2.582, 2.897, 3.348, 3.476, 3.755, 3.896, 4.013, 4.167, 4.275, 4.512 or 4.987, etc., which is not limited herein. When electrochemical reactions occur inside the electrode, the pores create more lithium ion diffusion pathways and electrochemical reaction interfaces for the anode material, promoting the diffusion of the lithium ions at the solid-liquid interface and in the solid phase, reducing concentration polarization, and improving the rate performance of the anode material.

In some embodiments, the specific surface area of the anode material is S m²/g, 0.872≤S≤1.773, such as 1.773, 1.643, 1.593, 1.532, 1.498, 1.446, 1.386, 1.315, 1.267, 1.157, 1.044, 0.9, or 0.872, etc., which is not limited herein. It can be understood that an excessively large specific surface area easily results in the formation of the excessive solid electrolyte interface, and consumes too much irreversible lithium salt, thereby reducing initial efficiency of the battery.

In some embodiments, the true density of the anode material is D g/cm³, 2.210≤D≤2.265, such as 2.2385, 2.2481, 2.2440, 2.2372, 2.2476, 2.2502, 2.2514 or 2.262, etc., which is not limited herein.

In some embodiments, the degree of graphitization of the anode material is G%, 89≤G≤93, such as 89, 90, 90.5, 91, 91.5, 92, 92.5 or 93, etc., which is not limited herein.

In some embodiments, the pores include at least one of micro-pores and meso-pores.

In some embodiments, the average pore size of the pores is 50 Å, 60 Å, 70 Å, 80 Å, 90 Å, 100 Å, 120 Å, 140Å, 160 Å or 200 Å, etc., which is not limited herein. Controlling the average pore size of the pores to be within the above range is beneficial for the Li⁺ to be transmitted from the surface of the material along the pore structure into the interior of the graphite, and the lithium deintercalation reaction further occurs. Preferably, the average pore size of the pores is 80 Å to 140 Å.

In some embodiments, the pores extend from the surface of the graphite to the interior.

In some embodiments, the graphite is artificial graphite.

In some embodiments, the particle size D₅₀ of the anode material is 10 µm to 20 µm, such as 10 µm, 11 µm, 12 µm, 13 µm, 14 µm, 15 µm, 18 µm, 19 µm or 20 µm, etc., which is not limited herein. It should be noted that the volume reference cumulative particle size distribution measured by the particle size distribution is measured by laser diffraction, and D₅₀ represents the particle size corresponding to the cumulative particle size distribution percentage reaching 50%.

In some embodiments, the anode material is measured by X-ray diffraction, and a crystal plane layer spacing of a plane (002) is d₀₀₂, where 3.356 Å≤d₀₀₂≤3.364 Å. The crystal plane layer spacing d ₀₀₂ is within the above range, and it can be seen that the artificial graphite particles have high graphite crystallinity, namely a high graphitization degree and the high capacity of the product.

In some embodiments, the anode material further includes an amorphous carbon coating layer located on a surface of the graphite, and a thickness of the amorphous carbon coating layer is 10 nm to 500 nm, such as 10 nm, 15 nm, 20 nm, 30 nm, 50 nm, 80 nm, 100 nm, 150 nm, 180 nm, 200 nm, 400 nm or 500 nm; preferably, the thickness of the amorphous carbon coating layer is 10nm to 100 nm.

In some embodiments, the anode material further includes amorphous carbon, and the amorphous carbon is present on a surface of graphite and/or dispersed among graphite particles. The graphite particles can be embedded in the amorphous carbon material by taking the amorphous carbon material as a matrix, and part of the graphite particles are exposed on the surface of the amorphous carbon material.

In some embodiments, the anode material further includes amorphous carbon, the mass ratio of the amorphous carbon in the anode material is 0.1 wt% to 3 wt%, the mass ratio of the amorphous carbon in the anode material may be 0.1 wt%, 0.3 wt%, 0.5 wt%, 1 wt%, 2 wt%, 2.5 wt% or 3 wt%, and the presence of the amorphous carbon provides more irregular and more open diffusion paths for lithium ions, which is beneficial to improving the rate performance of the material.

In some embodiments, the capacity retention of 500th cycle at the rate of 1C is greater than or equal to 90%, which may be 91.8%, 92.3%, 90.6%, 92.4%, 93.5%, etc., which is not limited herein.

The present disclosure further provides a method for preparing an anode material, including the following steps:
S10, mixing the softened asphalt with an alkaline solution having a concentration of 0.01 mol/L to 0.05 mol/L, and performing ultrasonic treatment to obtain a mixture, wherein, a mass content ratio of a saturate to an aromatic in the asphalt is (5 to 20): (95 to 80);
S20, drying and crushing the solid product washed with the mixture to obtain a powder D₅₀ of 10 µm to 20 µm;
S30, carbonizing the powder at 500 to 1200 °C in an inert atmosphere to obtain a precursor;
S40, placing the precursor at 2800 to 3200 °C for graphitization to obtain an anode material.

According to the preparation method of the anode material, the asphalt is mixed with the low-concentration alkaline solution, and the pore structure is formed in the interior of the asphalt through in-situ etching by ultrasonic means, so that the effective reaction area of the material is improved, and the lithium ion intercalation path is increased, and then the powder subjected to in-situ etching is carbonized, and in the carbonization process, impurities, volatile matters and unstable substances in the material can decompose and escape, so that the pore size and the pore depth formed by etching are further enlarged. The carbonized product is subjected to graphitization treatment to form graphite with rich and regular pores, the pore volume of the graphite is accurately controlled, the internal stress distribution of the graphite is adjusted to a certain extent, finally the reactive area of the negative electrode active material in the electrode is increased, which is beneficial to improve the high rate charge-discharge performance of the material. The process method is simple, the production cost is low, and the prepared graphite anode material has the characteristics of high specific capacity, excellent high rate charge-discharge performance, excellent cycle performance and the like, and can meet the requirements of consumer and power end users on negative electrode energy density and fast charge performance.

The technical solution of the present disclosure is described in detail below:
S10, mixing the softened asphalt with an alkaline solution having a concentration of 0.01 mol/L to 0.05 mol/L, and performing ultrasonic treatment to obtain a mixture, wherein, a mass content ratio of a saturate to an aromatic in the asphalt is (5 to 20): (95 to 80).

In some embodiments, the asphalt includes coal asphalt and/or petroleum asphalt, which may be modified asphalt and mesophase asphalt, and the like.

In some embodiments, the mass content ratio of the saturate to the aromatics in the asphalt is (5 to 20): (95 to 80) such as 5: 95, 8: 92, 10: 90, 13: 87, 15: 85, 18: 82, 20: 80, etc., or may be other values within the above range, which is not limited herein. By controlling the mass ratio of the saturate to the aromatics in the asphalt, the higher the aromatics content, the better the fluidity of the asphalt, the lower the softening temperature, and the higher the volatile matter, the volatile matter decomposes and escapes in the carbonization process, so that the pore formed by etching further expands the pore size and the pore depth, the stress in the graphite is more concentrated to the periphery of the pores, the stress at the grain boundary is reduced, when the graphite is subjected to external force, cracks are formed from the pore pathways at first, the pore pathways are finally constructed to be the outer surfaces of the graphite particles, so more graphite microcrystalline surfaces parallel to the lithium ion diffusion paths can be constructed, which not only create more lithium ion diffusion paths in interior of the graphite particles, but also more pathway inlets of the surfaces of the particle are created for the lithium ions entering.

In some embodiments, the asphalt is heated to 50 °C to 80 °C to soften to form liquid asphalt. The softening temperature may be 50 °C, 55 °C, 60 °C, 65 °C, 70 °C, 75 °C, 80 °C, etc., or may be another value within the above range, which is not limited herein.

In some embodiments, the alkaline solution includes at least one of a NaOH solution and a KOH solution.

In some embodiments, the concentration of the alkaline solution is 0.01 mol/L to 0.05 mol/L, which may be 0.01 mol/L, 0.02 mol/L, 0.03 mol/L, 0.04 mol/L, 0.045 mol/L or 0.05 mol/L, etc. It may also be other values within the above range, which is not limited herein. The concentration of the alkaline solution is too large, resulting in too many pores formed by etching the surface of the asphalt, thereby resulting in an excessively large pore volume and a relatively large specific surface area of the final graphite anode material, and it is difficult to control the ratio of V*S/D within an ideal range, which is not beneficial to improve the high rate charge-discharge performance and cycle performance of the anode material. The ratio of V*S/D of the anode material is controlled within the above range, so that the anode material has sufficient lithium deintercalation chemical reaction space, which is beneficial to obtain an anode material with better rate performance and capacity.

In some embodiments, the material ratio of the asphalt to the alkaline solution is 50g/100ml to 100g/100ml, which may be 50g/100ml, 60g/100ml, 70g/100ml, 75g/100ml, 80g/100ml, 85g/100ml, 90g/100ml or 100g/100ml, etc., it may also be other values within the above ranges, which are not limited herein. Controlling the material ratio of the asphalt to the alkaline solution can facilitate sufficient etching of the softened asphalt by the alkaline solution, thereby etching the surface of the asphalt to form an adaptive number of holes, reducing the stress at the grain boundary of the graphite obtained after graphitization, facilitating creation of more lithium ion diffusion paths, and improving the specific capacity and rate performance of the anode material.

In some embodiments, the time of ultrasonic treatment under heat preservation is 5h to 10h, which may be 5h, 6h, 7h, 8h, 9h or 10h, etc., but is not limited to the recited values, and other unrecited values within the numerical range are also applicable. During ultrasonic treatment, an alkaline solution continuously impacts and etches asphalt, so that a pore structure is formed in the interior of the asphalt small particles through in-situ etching, the pore structure creates more lithium ion diffusion pathways and electrochemical reaction interfaces for the anode material, promoting the diffusion of the lithium ions at the solid-liquid interface and in the solid phase, reducing concentration polarization, and it is beneficial to improve the rate performance of the anode material.
S20, drying and crushing the solid product washed with the mixture to obtain a powder D₅₀ of 10 µm to 20 µm;

In some embodiments, the softened asphalt is cooled to room temperature, washed and filtered repeatedly with distilled water until the filtrate is neutral, and a solid product is obtained by solid-liquid separation.

In some embodiments, the solid-liquid separation manner includes at least one of centrifugation and filtration, and the filtration may be at least one of atmospheric pressure filtration, vacuum filtration and reduced pressure filtration.

In some embodiments, the drying temperature is 80 °C to 120 °C, which may be 80 °C, 90 °C, 100 °C, 110 °C, and 120 °C, etc., but is not limited to the recited values, and other unrecited values within the numerical range are also applicable.

In some embodiments, the median particle size D₅₀ of the powder obtained by crushing is 10 µm to 20 µm, and may be 12 µm, 13 µm, 14 µm, 16 µm, 18 µm, 18.5 µm, 19 µm or 20 µm, etc., but is not limited to the recited values, and other unrecited values within the numerical range are also applicable. It is found through multiple tests that the median particle size of the powder is controlled within the above range, which is beneficial to considering the processability, capacity and rate performance.

S30, carbonizing the powder at 500 to 1200 °C in an inert atmosphere to obtain a precursor.

In some embodiments, a heating rate of the carbonization treatment may specifically be 2 °C/min, 3 °C/min, 5 °C/min, 6 °C/min, 8 °C/min, 9 °C/min or 10 °C/min, etc., It can be understood that the heating rate of the carbonization treatment is within the above range, which is beneficial for the volatile matter in the raw materials to escape at different rates, the pore size of the pore structure is further enlarged and/or deepened, and is combined with the heating rate in the subsequent graphitization process to obtain the anode material satisfying 0.70≤V*S/D≤3.95.

In some embodiments, the temperature of the carbonization treatment may specifically be 500°C, 550°C, 600°C, 700°C, 750°C, 800°C, 850°C, 900°C, 1000°C, or 1200°C, etc., but is not limited to the recited values, and other unrecited values within the numerical range are also applicable. It can be understood that the carbonization treatment temperature is within the above range, which is beneficial to discharge of volatile matter and the like in the powder.

In some embodiments, the heat preservation time of the carbonization treatment is 2h to 10h, such as 2h, 3h, 4h, 4.5h, 5h, 6h, 8h or 10h, etc., but is not limited to the recited values, and other unrecited values within the numerical range are also applicable.

S40, placing the precursor at 2800 to 3200 °C for graphitization to obtain an anode material.

In some embodiments, the heat preservation temperature of the graphitization treatment may be 2800°C, 2850°C, 2900°C, 2950°C, 3000°C, 3100°C, or 3200°C, etc., but is not limited to the recited values, and other unrecited values within the numerical range are also applicable.

In some embodiments, the heat preservation time of the graphitization treatment is 2h to 10h, which may be 2h, 3h, 4h, 4.5h, 5h, 6h, 8h or 10h, etc., but is not limited to the recited values, and other unrecited values within the numerical range are also applicable.

In some embodiments, the heating rate of the graphitization treatment may be 2°C/min to 10°C/min, such as 2°C/min, 3°C/min, 4°C/min, 6°C/min 8°C/min or 10°C/min, etc., but is not limited to the recited values, and other unrecited values within the numerical range are also applicable. A specific heating rate may facilitate controlling the formation of internal and/or surface pores and specific surface area of the material graphite.

In some embodiments, after the graphitization treatment, at least one of crushing, sieving and demagnetizing is further performed. Preferably, after graphitization treatment, crushing, demagnetizing and sieving are sequentially performed.

In some embodiments, the crushing manner is any one of a mechanical crusher, an airflow crusher, and a low-temperature crusher.

In some embodiments, the sieving manner includes any one of a fixed sieve, a drum sieve, a resonance sieve, a roller sieve, a vibrating sieve and a chain sieve. The number of the sieving is 100 meshes to 500 meshes, and specifically 100 meshes, 200 meshes, 250 meshes, 325 meshes, 400 meshes, and 500 meshes. The particle size of the anode material is controlled within the above range, which is beneficial to the improvement of the processability of the anode material.

In some embodiments, the demagnetizing device is any one of a permanent magnet drum magnetic separator, an electromagnetic iron remover and a pulsating high gradient magnetic separator, and the demagnetizing is to ultimately control the magnetic substance content of the anode material, reduce the discharge effect of the magnetic substance on the lithium ion battery, and ensure the safety of the battery during use.

The present disclosure further provides a battery including the above anode material.

Those skilled in the art will understand that the preparation method of the battery described above is only an embodiment. Other methods commonly used in the art can be used without departing from the scope of the present disclosure, and other types of batteries can further be prepared for testing, such as sodium ion batteries and potassium ion batteries.

The present disclosure is further described below through multiple embodiments. The embodiments of the present disclosure are not limited to the following specific embodiments. Within the scope of protection, changes can be implemented appropriately.

### Embodiment 1

The preparation method of the anode material of this example included the following steps:
(1) After the asphalt is heated to 80 °C for softening, the softened asphalt is, the softened asphalt is mixed with a 0.05 mol/L KOH alkaline solution, and ultrasonic treatment is performed at 80 °C for 10h to obtain a mixture, wherein, the asphalt mainly includes a saturate and an aromatic, and a content ratio of the saturate to the aromatics is 5: 95;
(2) The mixture was cooled to room temperature, washed and filtered with distilled water repeatedly until the filtrate was neutral, the solvent was removed by suction filtration, then placed in an oven for vacuum drying for 10h, and crushed to obtain powder (D₅₀ is 16.3 µm).
(3) The powder was carbonized at 1200 °C for 10h to obtain a precursor;
(4) The precursor was graphitized at a high temperature of 3000 °C for 8h to obtain a graphite anode material.

### Embodiment 2

The preparation method of the anode material of this example included the following steps:
(1) After the asphalt is heated to 80 °C for softening, the softened asphalt is mixed with a 0.04 mol/L KOH alkaline solution, and ultrasonic treatment is performed at 80 °C for 10h to obtain a mixture, wherein, the asphalt mainly includes a saturate and an aromatic, and a content ratio of the saturate to the aromatics is 10: 90;
(2) The mixture was cooled to room temperature, washed and filtered with distilled water repeatedly until the filtrate was neutral, the solvent was removed by suction filtration, then placed in an oven for vacuum drying for 10h, and crushed to obtain powder (D₅₀ is 16.9 µm).
(3) The powder was carbonized at 1000 °C for 10h to obtain a precursor;
(4) The precursor was graphitized at a high temperature of 3000 °C for 8h to obtain a graphite anode material.

### Embodiment 3

The preparation method of the anode material of this example included the following steps:
(1) After the asphalt is heated to 80 °C for softening, the softened asphalt is mixed with a 0.03 mol/L KOH alkaline solution, and ultrasonic treatment is performed at 80 °C for 10h to obtain a mixture, wherein, the asphalt mainly includes a saturate and an aromatic, and a content ratio of the saturate to the aromatics is 15: 85;
(2) The mixture was cooled to room temperature, washed and filtered with distilled water repeatedly until the filtrate was neutral, the solvent was removed by suction filtration, then placed in an oven for vacuum drying for 10h, and crushed to obtain powder (D₅₀ is 16.2 µm).
(3) The powder was carbonized at 1200 °C for 10h to obtain a precursor;
(4) The precursor was graphitized at a high temperature of 2900 °C for 8h to obtain a graphite anode material.

### Embodiment 4

The preparation method of the anode material of this example included the following steps:
(1) After the asphalt is heated to 80 °C for softening, the softened asphalt is mixed with a 0.02 mol/L KOH alkaline solution, and ultrasonic treatment is performed at 80 °C for 10h to obtain a mixture, wherein, the asphalt mainly includes a saturate and an aromatic, and a content ratio of the saturate to the aromatics is 20: 80;
(2) The mixture was cooled to room temperature, washed and filtered with distilled water repeatedly until the filtrate was neutral, the solvent was removed by suction filtration, then placed in an oven for vacuum drying for 10h, and crushed to obtain powder (D₅₀ is 15.7 µm).
(3) The powder was carbonized at 1200 °C for 10h to obtain a precursor;
(4) The precursor was graphitized at a high temperature of 2800 °C for 8h to obtain a graphite anode material.

### Embodiment 5

The preparation method of the anode material of this example included the following steps:
(1) After the asphalt is heated to 80 °C for softening, the softened asphalt is mixed with a 0.01 mol/L KOH alkaline solution, and ultrasonic treatment is performed at 80 °C for 10h to obtain a mixture, wherein, the asphalt mainly includes a saturate and an aromatic, and a content ratio of the saturate to the aromatics is 20: 80;
(2) The mixture was cooled to room temperature, washed and filtered with distilled water repeatedly until the filtrate was neutral, the solvent was removed by suction filtration, then placed in an oven for vacuum drying for 10h, and crushed to obtain powder (D₅₀ is 15.4 µm).
(3) The powder was carbonized at 500 °C for 10h to obtain a precursor;
(4) The precursor was graphitized at a high temperature of 2800 °C for 8h to obtain a graphite anode material.

### Embodiment 6

The preparation method of the anode material of this example included the following steps:
(1) After the asphalt is heated to 80 °C for softening, the softened asphalt is mixed with a 0.05 mol/L KOH alkaline solution, and ultrasonic treatment is performed at 70 °C for 8h to obtain a mixture, wherein, the asphalt mainly includes a saturate and an aromatic, and a content ratio of the saturate to the aromatics is 20: 80;
(2) The mixture was cooled to room temperature, washed and filtered with distilled water repeatedly until the filtrate was neutral, the solvent was removed by suction filtration, then placed in an oven for vacuum drying for 10h, and crushed to obtain powder (D₅₀ is 16.1 µm).
(3) The powder was carbonized at 1200 °C for 10h to obtain a precursor;
(4) The precursor was graphitized at a high temperature of 3000 °C for 8h to obtain a graphite anode material.

### Embodiment 7

The preparation method of the anode material of this example included the following steps:
(1) After the asphalt is heated to 70 °C for softening, the softened asphalt is mixed with a 0.04 mol/L KOH alkaline solution, and ultrasonic treatment is performed at 70 °C for 8h to obtain a mixture, wherein, the asphalt mainly includes a saturate and an aromatic, and a content ratio of the saturate to the aromatics is 20: 80;
(2) The mixture was cooled to room temperature, washed and filtered with distilled water repeatedly until the filtrate was neutral, the solvent was removed by suction filtration, then placed in an oven for vacuum drying for 10h, and crushed to obtain powder (D₅₀ is 16.8 µm).
(3) The powder was carbonized at 1000 °C for 10h to obtain a precursor;
(4) The precursor was graphitized at a high temperature of 3000 °C for 8h to obtain a graphite anode material.

### Embodiment 8

The preparation method of the anode material of this example included the following steps:
(1) After the asphalt is heated to 70 °C for softening, the softened asphalt is mixed with a 0.03 mol/L KOH alkaline solution, and ultrasonic treatment is performed at 70 °C for 8h to obtain a mixture, wherein, the asphalt mainly includes a saturate and an aromatic, and a content ratio of the saturate to the aromatics is 20: 80;
(2) The mixture was cooled to room temperature, washed and filtered with distilled water repeatedly until the filtrate was neutral, the solvent was removed by suction filtration, then placed in an oven for vacuum drying for 10h, and crushed to obtain powder (D₅₀ is 16.7 µm).
(3) The powder was carbonized at 1000 °C for 10h to obtain a precursor;
(4) The precursor was graphitized at a high temperature of 2900 °C for 8h to obtain a graphite anode material.

### Embodiment 9

The preparation method of the anode material of this example included the following steps:
(1) After the asphalt is heated to 70 °C for softening, the softened asphalt is mixed with a 0.02 mol/L KOH alkaline solution, and ultrasonic treatment is performed at 70 °C for 8h to obtain a mixture, wherein, the asphalt mainly includes a saturate and an aromatic, and a content ratio of the saturate to the aromatics is 20: 80;
(2) The mixture was cooled to room temperature, washed and filtered with distilled water repeatedly until the filtrate was neutral, the solvent was removed by suction filtration, then placed in an oven for vacuum drying for 10h, and crushed to obtain powder (D₅₀ is 16.8 µm).
(3) The powder was carbonized at 800 °C for 10h to obtain a precursor;
(4) The precursor was graphitized at a high temperature of 2800 °C for 8h to obtain a graphite anode material.

### Embodiment 10

The preparation method of the anode material of this example included the following steps:
(1) After the asphalt is heated to 70 °C for softening, the softened asphalt is mixed with a 0.01 mol/L KOH alkaline solution, and ultrasonic treatment is performed at 70 °C for 8h to obtain a mixture, wherein, the asphalt mainly includes a saturate and an aromatic, and a content ratio of the saturate to the aromatics is 20: 80;
(2) The mixture was cooled to room temperature, washed and filtered with distilled water repeatedly until the filtrate was neutral, the solvent was removed by suction filtration, then placed in an oven for vacuum drying for 10h, and crushed to obtain powder (D₅₀ is 15.6 µm).
(3) The powder was carbonized at 500 °C for 10h to obtain a precursor;
(4) The precursor was graphitized at a high temperature of 2800 °C for 8h to obtain a graphite anode material.

### Embodiment 11

The difference from Embodiment 1 is only that in step (1), after the asphalt is heated to 60 °C and softened, it is mixed with 0.05 mol/L NaOH alkaline solution, and ultrasonic treatment is performed at 60 °C for 6h to obtain a mixture, wherein, the asphalt is mainly saturated and aromatic, and the ratio of the content of saturated and aromatic is 20: 80.

### Embodiment 12

The difference from Embodiment 2 is only that in step (1), after the asphalt is heated to 60 °C and softened, it is mixed with 0.04 mol/L NaOH alkaline solution, and ultrasonic treatment is performed at 60 °C for 6h to obtain a mixture, wherein, the asphalt is mainly saturated and aromatic, and the ratio of the content of saturated and aromatic is 20: 80.

### Embodiment 13

The difference from Embodiment 3 is only that in step (1), after the asphalt is heated to 60 °C and softened, it is mixed with 0.03 mol/L NaOH alkaline solution, and ultrasonic treatment is performed at 60 °C for 6h to obtain a mixture, wherein, the asphalt is mainly saturated and aromatic, and the ratio of the content of saturated and aromatic is 20: 80.

### Embodiment 14

The difference from Embodiment 4 is only that in step (1), after the asphalt is heated to 60 °C and softened, it is mixed with 0.02 mol/L NaOH alkaline solution, and ultrasonic treatment is performed at 60 °C for 6h to obtain a mixture, wherein, the asphalt is mainly saturated and aromatic, and the ratio of the content of saturated and aromatic is 20: 80.

### Embodiment 15

The difference from Embodiment 5 is only that in step (1), after the asphalt is heated to 60 °C and softened, it is mixed with 0.01 mol/L NaOH alkaline solution, and ultrasonic treatment is performed at 60 °C for 6h to obtain a mixture, wherein, the asphalt is mainly saturated and aromatic, and the ratio of the content of saturated and aromatic is 20: 80.

### Embodiment 16

The difference from Embodiment 1 is only that in step (1), after the asphalt is heated to 50 °C and softened, it is mixed with 0.05 mol/L NaOH alkaline solution, and ultrasonic treatment is performed at 50 °C for 5h to obtain a mixture, wherein, the asphalt is mainly saturated and aromatic, and the ratio of the content of saturated and aromatic is 20: 80.

### Embodiment 17

The difference from Embodiment 2 is only that in step (1), after the asphalt is heated to 50 °C and softened, it is mixed with 0.04 mol/L NaOH alkaline solution, and ultrasonic treatment is performed at 50 °C for 5h to obtain a mixture, wherein, the asphalt is mainly saturated and aromatic, and the ratio of the content of saturated and aromatic is 20: 80.

### Embodiment 18

The difference from Embodiment 3 is only that in step (1), after the asphalt is heated to 50 °C and softened, it is mixed with 0.03 mol/L NaOH alkaline solution, and ultrasonic treatment is performed at 50 °C for 5h to obtain a mixture, wherein, the asphalt is mainly saturated and aromatic, and the ratio of the content of saturated and aromatic is 20: 80.

### Embodiment 19

The difference from Embodiment 4 is only that in step (1), after the asphalt is heated to 50 °C and softened, it is mixed with 0.02 mol/L NaOH alkaline solution, and ultrasonic treatment is performed at 50 °C for 5h to obtain a mixture, wherein, the asphalt is mainly saturated and aromatic, and the ratio of the content of saturated and aromatic is 20: 80.

### Embodiment 20

The difference from Embodiment 5 is only that in step (1), after the asphalt is heated to 50 °C and softened, it is mixed with 0.01 mol/L NaOH alkaline solution, and ultrasonic treatment is performed at 50 °C for 5h to obtain a mixture, wherein, the asphalt is mainly saturated and aromatic, and the ratio of the content of saturated and aromatic is 20: 80.

### Comparative Example 1

The preparation method of the anode material of this comparative example included the following steps:
(1) After the asphalt is heated to 80 °C for softening, the softened asphalt is mixed with a 0.2 mol/L KOH alkaline solution, and ultrasonic treatment is performed at 80 °C for 10h to obtain a mixture, wherein, the asphalt mainly includes a saturate and an aromatic, and a content ratio of the saturate to the aromatics is 5: 95;
(2) The mixture was cooled to room temperature, washed and filtered with distilled water repeatedly until the filtrate was neutral, the solvent was removed by suction filtration, then placed in an oven for vacuum drying for 10h, and crushed to obtain powder (D₅₀ is 16.6 µm).
(3) The powder was carbonized at 1200 °C for 10h to obtain a precursor;
(4) The precursor was graphitized at a high temperature of 3000 °C for 8h to obtain a graphite anode material.

### Comparative Example 2

The preparation method of the anode material of this comparative example included the following steps:
(1) After the asphalt is heated to 70 °C for softening, deionized water is added at 70 °C for ultrasonic treatment for 8h to obtain a mixture, wherein, the asphalt mainly includes a saturate and an aromatic, and a content ratio of the saturate to the aromatics is 20: 80;
(2) The mixture was cooled to room temperature, washed and filtered with distilled water repeatedly until the filtrate was neutral, the solvent was removed by suction filtration, then placed in an oven for vacuum drying for 10h, and shaped to obtain powder (D₅₀ is 16.8 µm).
(3) The powder was carbonized at 1200 °C for 10h to obtain a precursor;
(4) The precursor was graphitized at a high temperature of 3000 °C for 8h to obtain a graphite anode material.

### Test Method

(1) Test method for particle size of anode material:
   A particle size distribution range of the composite anode material was tested by a Markov laser particle size meter.
(2) Test method for pore volume of anode material:
   The pore volume V is tested by ASAP2460 device from American Micromeritics, and calculated in a pore size range of 17 Å to 3000 Å by a BJH Desortation cumulative volume of pores model.
(3) Test method for specific surface area of anode material:
   A dynamic specific surface area (with a unit of m²/g) rapid tester JW-DX from Beijing JWGB Sci & Tech Ltd was adopted for testing.
(4) Test method for surface morphology of anode material:
   The surface morphology of anode material particles was observed by a Hitachi S4800 scanning electron microscope.
(5) Test mode of true density of anode material:
   By adopting a PENTAPYC 5200e Gas Pycnometer of Anton Paar, the true volume of a tested material is accurately measured by the Boer's law (PV=nRT) of an inert gas with a small molecular diameter under a certain condition by applying the archimedes principle (density=mass/volume) of gas displacement, so that the true specific gravity of the material is obtained in the unit of g/cm³.
(6) A crystal plane layer spacing d₀₀₂ of a surface (002) of the material was characterized by X-ray diffraction, and the unit is Å. A microcrystalline size Lc in the c-axis direction and a ratio I₀₀₄/I₁₁₀ of peak intensity of a surface (004) to peak intensity of a surface (110) were solved by the X-ray diffraction.
(7) Test method for battery performance:
   The anode material, carboxymethyl cellulose, conductive carbon black and styrene-butadiene rubber prepared in Embodiments 1 to 20 and Comparative Examples 1 to 2 were magnetically stirred in deionized water at a mass ratio of 95:1.5:1.5:2 for 8 hours to be uniformly mixed. The mixed slurry was coated on copper foil and dried under vacuum at 60 °C as a working electrode. Metal lithium was used as a counter electrode and a reference electrode. A diaphragm was Celgard2325. An electrolyte was 1mol·L-1LiPF6-EC (ethylene carbonate)/DMC (dimethyl carbonate)/EMC (ethyl methyl carbonate) (volume ratio is 1:1:1), and CR2016 button battery assembly was achieved in a glove box filled with high-purity argon.

The capacity/initial efficiency test was performed on the LAND battery tester, and the charging and discharging conditions were as follows: rest for 2h; discharging: 0.1C to 0·005V, 0.09C, 0.08C... 0.02C to 0.001V; restfor 15min; charging: 0.1C to 1.5V; rest for 15min.

A button half-battery was tested for rate performance at 25±2°C to obtain charge and discharge specific capacity and coulombic efficiency of 0.2C, 1C and 2C. The charging and discharging conditions were tested for a buckling rate: ① discharged at 0.1C to 0.01V, maintained voltage for 5 hours, charged at 0.1C to 1.5V; ② discharged at 0.2C to 0.01V, maintained voltage to 0.01C, charged at 0.2C to 1.5V; (3) discharged at 0.2C to 0.01V, maintained voltage to 0.01C, charged at 2C to 1.5V; ④ discharged at 0.2C to 0.01V, maintained voltage to 0.01C, charged at 0.2C to 1.5V; (5) discharged at 1C to 0.01V, maintained voltage to 0.01C; charged 0.2C to 1.5V; ⑥ discharged at 2C to 0.01V.

Full battery test: the anode material prepared in each embodiment was used as a negative electrode active material. The negative electrode active material, a conductive agent, the binder, and the dispersant were dissolved and mixed in deionized water according to a mass percentage of 95.2:1.5:2:1.3, with a controlled solid content of 50 wt%, then coated on a copper foil current collector with a thickness of 8 µm, and dried in vacuum to prepare a negative electrode. Lithium iron phosphate, polyvinylidene fluoride and conductive agent carbon black were uniformly mixed with a solvent NMP (N-methylpyrrolidone) according to a mass ratio of 95:2:3, then coated on an aluminum foil with a thickness of 16µm, and dried in vacuum to prepare a positive electrode. The coated positive electrode and the coated negative electrode were subjected to the procedures of sheet preparation, winding, drying, liquid injection, sealing, formation and volume separation to prepare a 554065-type soft package lithium ion battery.

The obtained soft package battery was charged and discharged on a LAND battery test system of Wuhan Kono Electronics Co., Ltd. Under normal temperature conditions, charging and discharging are conducted at a rate of 1C/1C. The charge and discharge voltage was controlled to 3.0V to 4.35V, and first effect and 500 cycles capacity retention rate tests was conducted (the compaction density of the negative electrode was 1.60g/cm³).

Performance test results of the anode material obtained in the above examples are shown in Table 1 below, and performance test results of the battery made of the anode material are shown in Table 2 below:

**Table 1. Performance Comparison Results of Anode materials**

| Sample | Pore volume V (cm³/kg) | Specific Surface Area S (m²/g) | True density D (g/cm³ ) | V*S/D | Degree of Graphitization G (%) | Average Pore Size (Å) | D₅₀ (µm) | d₀₀₂ (Å) |
|---|---|---|---|---|---|---|---|---|
| S1 | 4.987 | 1.773 | 2.2385 | 3.95 | 91.2 | 118.3 | 16.77 | 3.3612 |
| S2 | 5.012 | 1.733 | 2.2481 | 3.86 | 90.6 | 112.4 | 17.12 | 3.3616 |
| S3 | 4.512 | 1.643 | 2.2440 | 3.30 | 89.7 | 117.6 | 16.38 | 3.3621 |
| S4 | 4.275 | 1.593 | 2.2425 | 3.04 | 92.2 | 114.5 | 15.93 | 3.3618 |
| S5 | 4.167 | 1.544 | 2.2432 | 2.87 | 92.5 | 111.3 | 15.66 | 3.3609 |
| S6 | 4.013 | 1.532 | 2.2431 | 2.74 | 91.4 | 108.7 | 16.34 | 3.3622 |
| S7 | 3.896 | 1.498 | 2.2441 | 2.60 | 91.8 | 104.8 | 17.12 | 3.3626 |
| S8 | 3.755 | 1.446 | 2.2452 | 2.42 | 90.9 | 107.3 | 17.04 | 3.3606 |
| S9 | 3.476 | 1.386 | 2.2372 | 2.15 | 89.5 | 108.8 | 17.88 | 3.3631 |
| S10 | 3.348 | 1.315 | 2.2476 | 1.96 | 89.8 | 111.4 | 15.79 | 3.3622 |
| S11 | 3.049 | 1.328 | 2.2370 | 1.81 | 92.3 | 112.5 | 16.45 | 3.3619 |
| S12 | 2.897 | 1.267 | 2.2498 | 1.63 | 91.6 | 104.8 | 16.72 | 3.3608 |
| S13 | 2.823 | 1.221 | 2.2502 | 1.53 | 91.1 | 101.2 | 16.88 | 3.3611 |
| S14 | 2.665 | 1.157 | 2.2578 | 1.37 | 91.8 | 98.5 | 15.94 | 3.3617 |
| S15 | 2.582 | 1.112 | 2.2513 | 1.28 | 90.9 | 96.3 | 16.03 | 3.3623 |
| S16 | 2.423 | 1.044 | 2.2511 | 1.12 | 92.0 | 94.4 | 16.77 | 3.3628 |
| S17 | 2.256 | 0.976 | 2.2515 | 0.98 | 92.1 | 94.1 | 17.23 | 3.3624 |
| S18 | 2.016 | 0.912 | 2.2531 | 0.82 | 92.3 | 92.1 | 17.18 | 3.3619 |
| S19 | 1.902 | 0.868 | 2.2552 | 0.73 | 92.0 | 87.3 | 16.74 | 3.3622 |
| S20 | 1.812 | 0.872 | 2.2562 | 0.70 | 91.8 | 83.2 | 16.89 | 3.3627 |
| D1 | 7.233 | 1.924 | 2.2377 | 6.22 | 90.1 | 112.3 | 17.02 | 3.3617 |
| D2 | 1.12 | 0.801 | 2.2560 | 0.40 | 91.4 | 86.6 | 17.17 | 3.3621 |

**Table 2. Battery Performance Comparison Results**

| Sample | Specific Capacity (mAh/g) | First Cycle Coulombic Efficiency (%) | 1C/0.2C Capacity Retention (%) | 2C/0.2C Capacity Retention (%) | 500 Cycles Capacity Retention Rate (%) |
|---|---|---|---|---|---|
| S1 | 356.3 | 94.4 | 64.5 | 24.7 | 91.8 |
| S2 | 355.4 | 95.2 | 65.2 | 23.8 | 90.6 |
| S3 | 357.3 | 94.9 | 64.8 | 23.6 | 92.3 |
| S4 | 358.2 | 95.2 | 64.5 | 24.4 | 93.1 |
| S5 | 358.1 | 95.3 | 64.4 | 24.2 | 92.1 |
| S6 | 359.3 | 95.5 | 64.4 | 24.5 | 91.9 |
| S7 | 358.4 | 95.8 | 63.9 | 24.3 | 92.3 |
| S8 | 360.5 | 94.7 | 65.3 | 24.3 | 92.4 |
| S9 | 361.2 | 94.5 | 65.5 | 24.8 | 92.8 |
| S10 | 362.8 | 95.1 | 65.2 | 23.4 | 92.4 |
| S11 | 365.1 | 95.3 | 66.1 | 22.9 | 92.7 |
| S12 | 362.9 | 96.1 | 64.7 | 23.5 | 94.2 |
| S13 | 363.7 | 94.6 | 64.4 | 24.1 | 93.5 |
| S14 | 365.1 | 94.2 | 65.2 | 24.7 | 93.8 |
| S15 | 364.4 | 95.6 | 65.6 | 24.2 | 93.3 |
| S16 | 366.3 | 94.9 | 64.4 | 24.9 | 91.7 |
| S17 | 364.7 | 94.5 | 64.8 | 23.8 | 90.8 |
| S18 | 365.6 | 95.3 | 64.2 | 24.2 | 92.7 |
| S19 | 365.2 | 95.5 | 64.4 | 25.1 | 93.2 |
| S20 | 366.8 | 95.7 | 64.0 | 24.5 | 93.4 |
| D1 | 365.2 | 93.8 | 64.1 | 23.4 | 82.3 |
| D2 | 355.3 | 95.5 | 56.2 | 20.1 | 92.3 |

According to the test data of Embodiments 1 to 20, it can be seen that the pore were formed inside and/or at the surface of the graphite prepared in embodiments of the present disclosure, thereby improving high rate charging performance of the material. This is because the parameters 0.7≤V*S/D≤3.95 and 89≤G≤93 of the anode material are controlled, which is beneficial to the combination of lithium ions and sufficient carbon atoms under the condition of low resistance, the lithium ions are rapidly diffused at the solid-liquid interface and in the solid phase, the formation of lithium deposition is inhibited, the concentration polarization is reduced, the lithium ion diffusion pathway of the anode material is fully utilized, so that the anode material has sufficient lithium deintercalation reaction space, and the anode material with better rate performance and capacity is obtained.

According to the anode material prepared in Comparative Example 1, the concentration of the adopted alkaline solution is too large, the pore volume generated by etching is too large, the specific surface area is too large, V*S/D is out of the above range, after the pores between the anode material particles are infiltrated, a solid electrolyte interface is formed on the surfaces of the anode material particles, and surface lithium storage is formed at the same time, more electrolyte lithium ions aggregated on the surfaces of the graphite particles generate concentration polarization, lithium deposition is formed, then diffusion of lithium ions is inhibited, the surfaces of the particles cannot generate electrochemical reaction, the "effective electrochemical reaction space" of the anode material is reduced, and the cycle performance of the material is poor.

In the preparation process of the anode material prepared in Comparative Example 2, no alkaline solution is added for in-situ etching treatment, but graphitization treatment is directly performed, graphite pores are not rich enough, the pore volume V is too small, the specific surface area is also reduced, V*S/D is separated from the above range, and lithium ions do not have sufficient diffusion pathways, resulting in poor rate performance of the material.

Although the present application is disclosed above in terms of preferred examples, it is not intended to limit the claims, and several possible changes and modifications can be made by any those skilled in the art without departing from the concept of the present application, so the protection scope of the present application should be defined by the claims of the present application.

## Claims

1. An anode material, comprising graphite, wherein a surface and/or an interior of the graphite has pores, a pore volume of the anode material is V cm³/kg, a true density is D g/cm³, a specific surface area is S m²/g, and a degree of graphitization is G%, where 0.7≤V*S/D≤3.95, and 89≤G≤93; and
the pore volume is tested by ASAP2460 device from American Micromeritics, and calculated in a pore size range of 17 Å to 3000 Å by a model of BJH Desortation cumulative volume of pores.

2. The anode material according to claim 1, wherein, the anode material satisfies at least one of the following features:
(1) the pore volume of the anode material is V cm3/kg, where 1.812≤V≤4.987;
(2) the specific surface area of the anode material is S m2/g, where 0.872≤S≤1.773;
(3) the true density of the anode material is D g/cm3, where 2.238≤D≤2.257.

3. The anode material according to claim 1 or 2, satisfying at least one of the following features:
(1) the pores comprise at least one of micro-pores and meso-pores;
(2) the pores extend from the surface of the graphite to the interior of the graphite;
(3) the graphite is artificial graphite.

4. The anode material according to claim 3, wherein, an average pore size of the pores ranges from 50 Å to 200 Å.

5. The anode material according to claim 1 or 2, wherein, a crystal plane spacing of a plane 002 of a graphite crystal determined by X-ray diffraction is d002, where 3.356 Å≤d002≤3.364 Å.

6. The anode material according to claim 1, wherein, a particle size D50 of the anode material ranges from 10 µm to 20 µm.

7. The anode material according to claim 1, further comprising amorphous carbon, wherein
the amorphous carbon is located on a surface of graphite and/or dispersed among graphite particles.

8. The anode material according to claim 1, further comprising an amorphous carbon coating layer located on a surface of the graphite, wherein
a thickness of the amorphous carbon coating layer ranges from 10 nm to 500 nm.

9. The anode material according to claim 7 or 8, wherein, a mass ratio of the amorphous carbon to the anode material ranges from 0.1 wt% to 3wt%.

10. A battery, comprising an anode material according to any one of claims 1 to 9.
